# EUROPÄISCHE PATENTSCHRIFT

(11) **EP 2 708 386 B1**
(45) Veröffentlichungstag und Bekanntmachung des Hinweises auf die Patenterteilung: **13.07.2016**
(21) Anmeldenummer: 13004475.3
(22) Anmeldetag: 13.09.2013
(51) Int. Cl.: B60D 1/04, B60D 1/24, B60D 1/46, B60D 1/00

(54) **Kupplungsvorrichtung für ein Kraftfahrzeug**
Coupling device for a motor vehicle
Dispositif d'embrayage pour un véhicule automobile

(30) Priorität: 17.09.2012 DE 202012008848 U
(43) Veröffentlichungstag der Anmeldung: 19.03.2014
(73) Patentinhaber: Sauermann, Hans, 86558 Hohenwart (DE)
(72) Erfinder: Sauermann, Hans, 86558 Hohenwart (DE)
(74) Vertreter: TBK

(56) Entgegenhaltungen:
- EP-A1- 1 876 040
- DE-U1-202008 014 513
- GB-A- 2 380 720
- US-A- 4 542 913

## Beschreibung

Die Erfindung betrifft eine Kupplungsvorrichtung für ein Kraftfahrzeug, insbesondere für einen Ackerschlepper gemäß dem Oberbegriff des Patentanspruchs 1.
Aus der EP 0 346 885 B1 ist eine Kupplungsvorrichtung für ein Kraftfahrzeug bekannt, die zwei vordere und zwei hintere Lenker aufweist. Die freien Enden dieser Lenker halten einen Kupplungsträger, an dessen Ende eine Kupplung vorgesehen ist. Dabei sind die vorderen Lenker am vorderen Ende und die hinteren Lenker im mittleren Bereich des Kupplungsträgers gehalten. Durch diese besondere Aufhängung des Kupplungsträgers ist die Kupplung entlang einer bogenförmigen Bahn verstellbar. Diese Bahn verläuft, ausgehend von einer abgesenkten Stellung der Kupplung, zunächst im Wesentlichen nach oben und anschließend nach vorne und oben, so dass eine in die Kupplung eingehängte Öse zunächst angehoben und anschließend zusätzlich zum Zugfahrzeug herangezogen wird. Zur Verstellung des Kupplungsträgers ist oberhalb des Getriebekastens ein Getriebemotor vorgesehen, der über ein Kurbelgestänge am Kupplungsträger angreift.

Aus der EP 1 099 575 B1 ist eine weitere Kupplungsvorrichtung bekannt. Diese unterscheidet sich von der vorgenannten Kupplungsvorrichtung im Wesentlichen dadurch, dass zur Verstellung des Kupplungsträgers ein Hydraulikzylinder eingesetzt ist. Dieser Hydraulikzylinder ist dabei heckseitig am Getriebekasten des Kraftfahrzeugs angelenkt, um einen günstigen Angriffswinkel des Hydraulikzylinders am Kupplungsträger zu gewährleisten. Dabei ist es erforderlich, dass der Hydraulikzylinder mittig angelenkt ist, so dass Standardhydraulikzylinder mit endseitiger Anlenkung nicht einsetzbar sind. Außerdem erschwert dieser Hydraulikzylinder den Zugang zu heckseitigen Anschlüssen des Kraftfahrzeugs.

Aus der EP 1 876 040 A1 ist eine gattungsgemäße Kupplungsvorrichtung für einen Ackerschlepper bekannt, die zwei vordere und zwei hintere Lenker aufweisen. Diese Lenker sind mit ihren freien Enden gelenkig mit einem Kupplungsträger verbunden, der eine Kupplung hält. Die hinteren Lenker sind dabei zwischen der Kupplung und den vorderen Lenkern am Kupplungsträger angelenkt. Zur Verstellung des Kupplungsträgers ist ein Hydraulikzylinder vorgesehen, der mit dem Kupplungsträger in Wirkverbindung steht. Der Hydraulikzylinder ist dabei einseitig mit einer fahrzeugfesten Schwenkachse angelenkt, welche vor den vorderen Lenkern vorgesehen ist. Dieser Hydraulikzylinder erfasst dabei den Kupplungsträger über eine Hebeverbindung, die in den hinteren Lenkern integriert ist. Die Kraftübertragung erfolgt dabei über ein fahrzeugfestes Widerlager. Diese bekannte Kupplungsvorrichtung hat sich in der Praxis bewährt und bildet den Ausgangspunkt der vorliegenden Erfindung.

Der Erfindung liegt die Aufgabe zugrunde, einen Kupplungsträger der eingangs genannten Art zu schaffen, die einfach zu betätigen ist, wobei der Zugang zu elektrischen bzw. hydraulischen Anschlüssen des Kraftfahrzeugs in keiner Weise behindert wird.

Diese Aufgabe wird erfindungsgemäß mit den Merkmalen des Patentanspruchs 1 oder 2 gelöst.

Die Kupplungsvorrichtung gemäß Anspruch 1 weist mindestens einen hinteren und vorderen Lenker auf, an deren Enden ein Kupplungsträger gelenkig gehalten ist. Diese, im Allgemeinen als "Hitch" bezeichnete Anordnung, gestattet ein Absenken und Anheben einer am Kupplungsträger gehaltenen Kupplung. Diese Kupplung wird dabei entlang einer von den Lenkern und dem Kupplungsträger bestimmten Bahn verstellt, die, ausgehend von einer abgesenkten Stellung, zunächst im Wesentlichen nach oben und anschließend nach vorne und oben verläuft. Eine schwere Deichsel eines Anhängers wird daher von der Kupplungsvorrichtung angehoben, ohne dass hierzu Muskelkraft erforderlich wäre. Insbesondere bei schweren Deichseln, wie sie beispielsweise bei Einachsanhängern vorkommen, ist dies von besonderer Bedeutung, da diese sonst so lange in angehobener Stellung gehalten werden müssten, bis der Ackerschlepper in die korrekte Lage rangiert wurde, so dass die Deichsel mit der Kupplung verbunden werden kann. Dies ist bei der erfindungsgemäßen Ausbildung der Kupplungsvorrichtung nicht erforderlich, so dass der Ankupplungsvorgang insbesondere auch von einer einzigen Person mit geringstem Einsatz an Muskelkraft durchgeführt werden kann. Die Verstellung des Kupplungsträgers erfolgt deshalb durch mindestens einen Hydraulikzylinder. Dieser Hydraulikzylinder ist am Kupplungsträger angelenkt, um diesen zu verstellen. Um den Zugang zu heckseitigen Anschlüssen des Ackerschleppers nicht zu beeinträchtigen, ist der mindestens eine Hydraulikzylinder an einer fahrzeugfesten Schwenkachse angelenkt, welche sich vor dem mindestens einen vorderen Lenker befindet. Damit kann der mindestens eine Hydraulikzylinder platzsparend innerhalb des Kupplungsträgers untergebracht werden, wo er die Bedienung des Kraftfahrzeugs in keiner Weise beeinträchtigt. Problematisch an dieser platzsparenden Unterbringung des mindestens einen Hydraulikzylinders ist jedoch, dass insbesondere nahe der angehobenen Kuppelstellung der mindestens eine Hydraulikzylinder nahezu senkrecht zur Bewegungsrichtung des Kupplungsträgers gerichtet ist. Dies führt zu einer sehr ungünstigen Krafteinkopplung, so dass der mindestens eine Hydraulikzylinder nahe der Kupppelstellung des Kupplungsträgers in der Regel nicht mehr die erforderliche Verstellkraft aufbringt. Der mindestens eine Hydraulikzylinder müsste daher beträchtlich überdimensioniert werden, was wiederum zu zusätzlichen Kosten und weiteren Platzproblemen führte. Zur Lösung dieses Problems wird vorgeschlagen, dass der mindestens eine Hydraulikzylinder den Kupplungsträger über mindestens ein Getriebe erfasst. Dieses Getriebe steht dabei mit mindestens einem fahrzeugfesten Widerlager in Kraft übertragender Wirkverbindung. Damit kann der mindestens eine Hydraulikzylinder den Kupplungsträger einerseits unmittelbar und andererseits mittelbar über das mindestens eine Getriebe und das Widerlager betätigen. Damit kann der kritische Teil des Weges des Kupplungsträgers mit ungünstiger Krafteinkopplung durch das mindestens eine Getriebe bewerkstelligt werden. Auf diese Weise kann der mindestens eine Hydraulikzylinder platzsparend untergebracht werden, ohne Probleme mit der Verstellung des Kupplungsträgers in Kauf nehmen zu müssen. Das mindestens eine Getriebe weist mindestens einen am Kupplungsträger angelenkten Hebel auf, der mit dem mindestens einen Widerlager in Wirkverbindung steht. Vorzugsweise ist dieser mindestens eine Hebel klauenartig ausgebildet, um eine vom mindestens einen Hydraulikzylinder hervorgerufene Schwenkbewegung in die gewünschte Hebebewegung des Kupplungsträgers umzusetzen. Auf diese Weise ergibt sich ein sehr einfacher mechanischer Aufbau mit günstiger Krafteinwirkung des mindestens einen Hydraulikzylinders.

Um zu verhindern, dass der mindestens eine Hebel im Schwenkbereich des Kupplungsträgers nahe der abgesenkten Ankuppelstellung des Kupplungsträgers verschwenkt wird, steht der mindestens eine Hebel mit mindestens einer Sperrnocke in Wirkverbindung. Diese mindestens eine Sperrnocke verhindert ein Verschwenken des mindestens einen Hebels, vorzugsweise bis der mindestens eine Hebel mit dem mindestens einen Widerlager zusammenwirken kann. Da der mindestens eine Hebel nur zum Verschwenken des Kupplungsträgers nahe der angehobenen Endstellung - im folgenden Kuppelstellung genannt - benötigt wird, sperrt die mindestens eine Sperrnocke den mindestens einen Hebel nahe der abgesenkten Stellung des Kupplungsträgers und gibt ihn nur nahe der angehobenen Kuppelstellung des Kupplungsträgers frei. Damit ist sichergestellt, dass der mindestens eine Hebel nicht vorzeitig vom mindestens einen Hydraulikzylinder verschwenkt wird, so dass der Schwenkwinkel des mindestens einen Hebels für die kritische letzte Phase des Hebevorgangs des Kupplungsträgers zur Verfügung steht.

Alternativ ist es vorteilhaft, wenn der mindestens eine Hebel mit mindestens einer Betätigungsnocke in Wirkverbindung steht, welche am mindestens einen hinteren Lenker und/oder Fahrzeug fest vorgesehen ist. Damit wird die Freigabe des mindestens einen Hebels durch die mindestens eine Nocke selbsttätig bei einer vorgegebenen Stellung des Kupplungsträgers durchgeführt. Hierzu sind keine weiteren Stellmittel erforderlich.

Um sicherzustellen, dass sich die mindestens eine Sperrnocke in abgesenkter Stellung des Kupplungsträgers stets in der Sperrstellung befindet, ist diese gemäß Anspruch 3 federnd in die Sperrstellung vorgespannt. Die Federkraft ist dabei derart bemessen, dass die mindestens eine Sperrnocke durch die mindestens eine Betätigungsnocke verstellbar bleibt.

Der Erfindungsgegenstand wird beispielhaft anhand der Zeichnung erläutert, ohne den Schutzumfang zu beschränken.

Es zeigt:
Figur 1 eine räumliche Darstellung einer Kupplungsvorrichtung mit abgesenktem Kupplungsträger.
Figur 2 eine Schnittdarstellung gemäß Figur 1,
Figur 3 die Darstellung gemäß Figur 1 in einer teilweise angehobenen Stellung des Kupplungsträgers,
Figur 4 die Darstellung gemäß Figur 3 mit angehobenem Kupplungsträger und
Figur 5 eine Schnittdarstellung gemäß Figur 4.

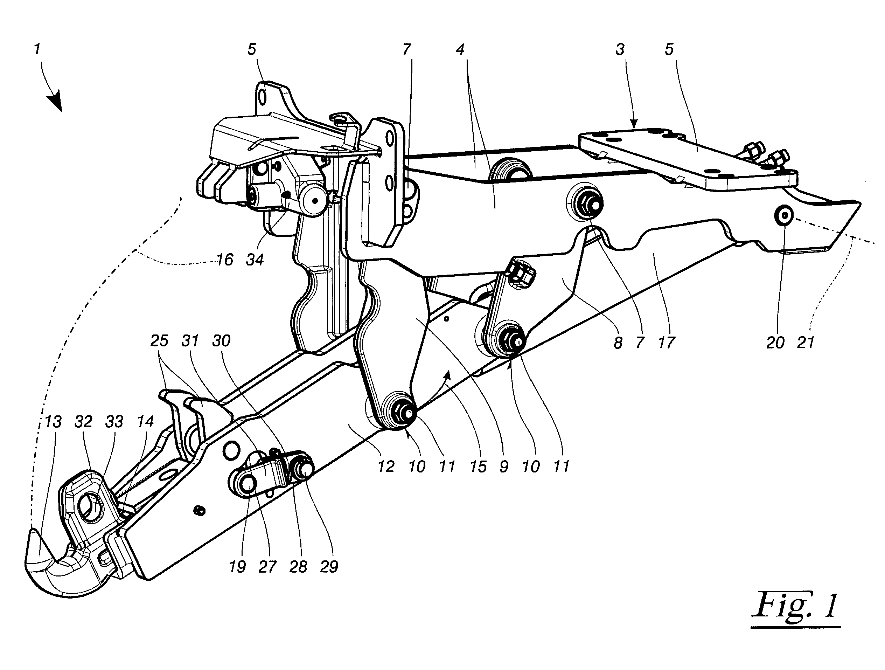

Figur 1 zeigt eine Kupplungsvorrichtung 1 für ein nicht dargestelltes Kraftfahrzeug, insbesondere einen Ackerschlepper.

Am Kraftfahrzeug, insbesondere an dessen Getriebekasten ist unterseitig ein Rahmen 3 der Kupplungsvorrichtung 1 stationär gehalten, der aus seitlichen Wangen 4 und Querversteifungen 5 gebildet ist. An diesem Rahmen 3 sind Lager 7 zur schwenkbaren Abstützung zweier vorderer Lenker 8 und zweier hinterer Lenker 9 vorgesehen. Im Bereich der freien Enden 10 der Lenker 8, 9 sind Schwenklager 11 vorgesehen, über die ein Kupplungsträger 12 an den Lenkern 8, 9 schwenkbar gehalten ist.

Im Kupplungsträger 12 ist eine Kupplung 13 lösbar gehalten, die lediglich beispielhaft als Kupplungshaken ausgebildet ist. Es ist jedoch auch vorstellbar, jede beliebige andere Kupplungsform am Kupplungsträger 12 zu halten. Es ist insbesondere daran gedacht, an einem Schaft 14 beidendig unterschiedliche Kupplungen 13 zu halten, so dass die Kupplung 13 durch einfaches Umdrehen des Schaftes 14 dem vorgesehenen Verwendungszweck angepasst werden kann.

Durch die besondere Aufhängung des Kupplungsträgers 12 an den vorderen 8 und hinteren Lenkern 9 wird erreicht, dass beim Verschwenken dieser Lenker 8, 9 in Verstellrichtung 15 die Kupplung 13 entlang einer Bahn 16 verstellt wird, die ausgehend von der in Figur 1 dargestellten, abgesenkten Lage zunächst im Wesentlichen vertikal nach oben und anschließend nach vorne und oben verläuft.

Zur Verstellung des Kupplungsträgers 12 ist ein Hydraulikzylinder 17 vorgesehen, der im hinteren Endbereich 18 des Kupplungsträgers 12 über ein Schwenklager 19 angreift. Der Hydraulikzylinder 17 ist in einem Schwenklager 20 abgestützt, welches eine vor den vorderen Lenkern 8 angeordnete Schwenkachse 21 definiert.

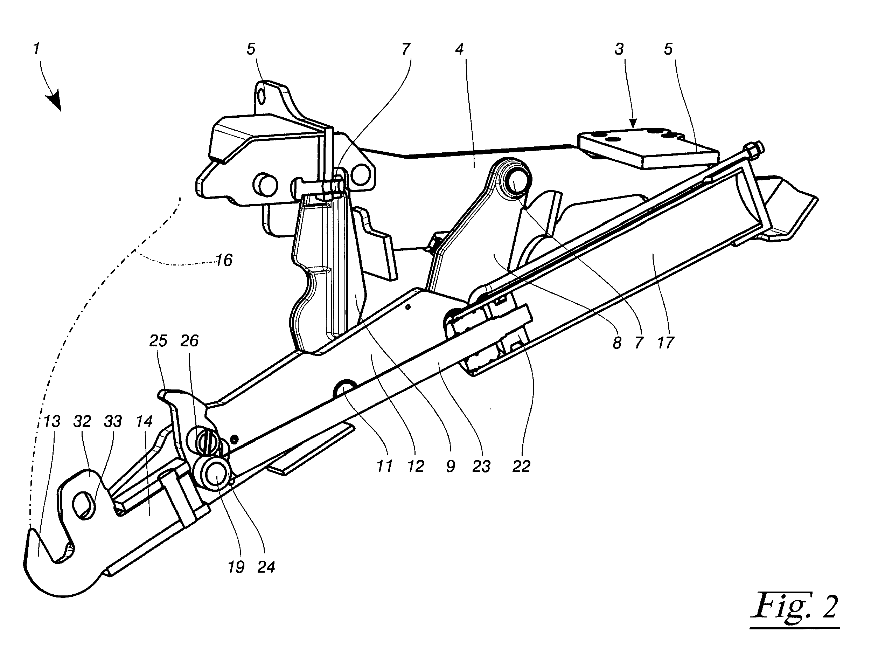

Insbesondere aus der Schnittdarstellung gemäß Figur 2 ist zu ersehen, dass der Hydraulikzylinder 17 einen Kolben 22 aufweist, an dem eine Kolbenstange 23 angreift. Ein endseitiges Lagerauge 24 der Kolbenstange 23 erfasst den Kupplungsträger 12 indirekt über einen Hebel 25, der um eine Achse 26 schwenkbar im Kupplungsträger 12 gelagert ist.

Aus der räumlichen Darstellung gemäß Figur 1 ist zu entnehmen, dass der Hebel 25 doppelt vorhanden ist. Alternativ könnte auch nur ein Hebel 25 oder mehr als zwei Hebel 25 vorgesehen sein. Außerdem durchsetzt er eine nierenförmige Öffnung 27 des Kupplungsträgers 12. Diese nierenförmige Öffnung 27 ist derart ausgelegt, dass sie eine Verschwenkung der Hebel 25 um einen begrenzten Schwenkwinkel erlaubt. Das Schwenklager 19 zum Angriff des Lagerauges 24 ist am Hebel 25 angeordnet. Damit dient der Hydraulikzylinder 17 sowohl zum Verschwenken des Hebels 25 als auch zum unmittelbaren Verstellen des Kupplungsträgers 12.

Um zu verhindern, dass die Hebel 25 bereits in der dargestellten Ankuppelstellung bei abgesenktem Kupplungsträger 12 vom Hydraulikzylinder 17 verschwenkt werden, ist am Kupplungsträger 12 eine Sperrnocke 28 verschwenkbar abgestützt. Diese Sperrnocke 28 ist um eine Schwenkachse 29 verschwenkbar gehalten und wird von einer Feder 30 in die dargestellte Sperrstellung vorgespannt. Am Schwenklager 19 ist zu diesem Zweck ein Gegenlager 31 vorgesehen, welches in der Sperrstellung mit der Sperrnocke 28 zusammenwirkt. Hierdurch wird jegliche Verschwenkung der Hebel 25 beim Anziehen des Hydraulikzylinders 17 verhindert.

Am Kupplungsglied 13 ist außerdem ein Flansch 32 vorgesehen, der eine Öffnung 33 aufweist. Statt einer Öffnung 33 könnte alternativ auch eine Ausbuchtung oder dgl. vorgesehen sein. Der Flansch 32 mit seiner Öffnung 33 wirkt mit einer Arretiervorrichtung 34 zusammen, welche einen nicht dargestellten, verschiebbaren Bolzen aufweist. Dieser Bolzen lässt sich derart verschieben, dass er in einer Sperrstellung die Öffnung 33 des Flansches 32 durchsetzt und auf diese Weise die Kupplungsvorrichtung 1 verriegelt. Ein versehentliches Absenken der Kupplungsvorrichtung 1 in die in Figur 1 dargestellte Ankuppelstellung wird dadurch selbst beim Ausfall der gesamten Hydraulik zuverlässig verhindert.

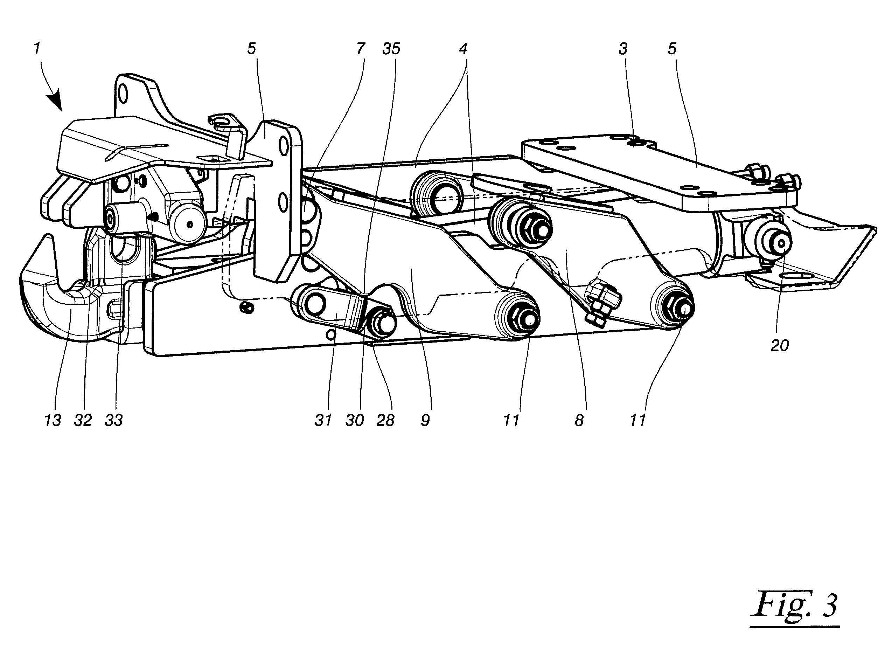

Um an das Kraftfahrzeug einen Anhänger anzukuppeln, wird dessen Deichsel zunächst mit der Kupplung 13 verbunden, was aufgrund deren, auf eine Fahrbahn abgesenkten und weit hinter ein Heck des Kraftfahrzeugs zurückreichenden Lage einfach und ohne größeren Kraftaufwand durchführbar ist. Anschließend wird der Kupplungsträger 12 mittels des Hydraulikzylinders 17 verschwenkt, wobei die Kupplung 13 durch die Anlenkung der vorderen 8 und hinteren Lenker 9 entlang der Bahn 16 verstellt wird. Die Kupplung 13 wird daher zunächst mit der daran gehaltenen Deichsel des Anhängers angehoben und anschließend zusätzlich nach oben und vorne verschoben, bis sie die in Figur 3 dargestellte Auslöse-Lage nahe dem Fahrzeugheck einnimmt.

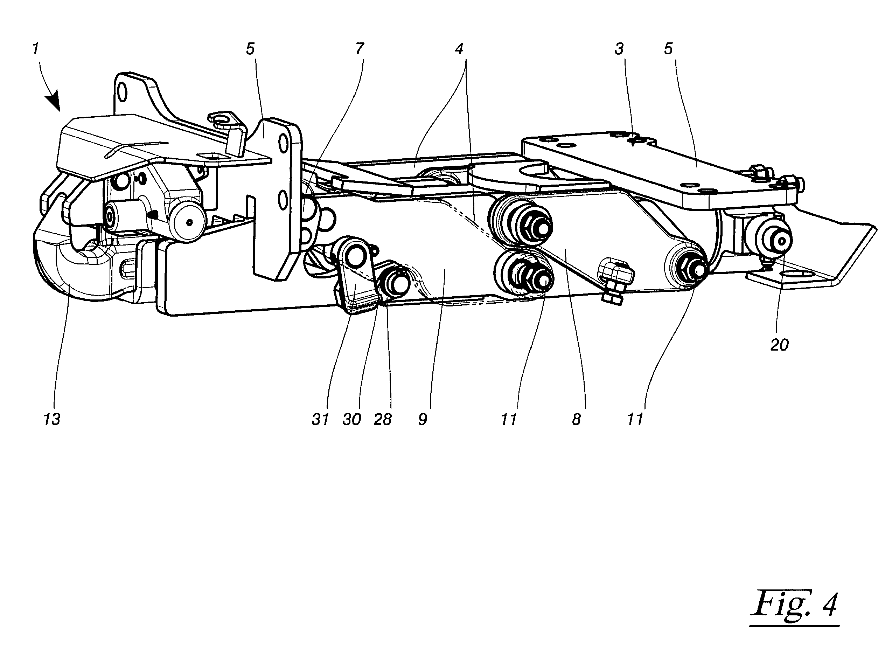

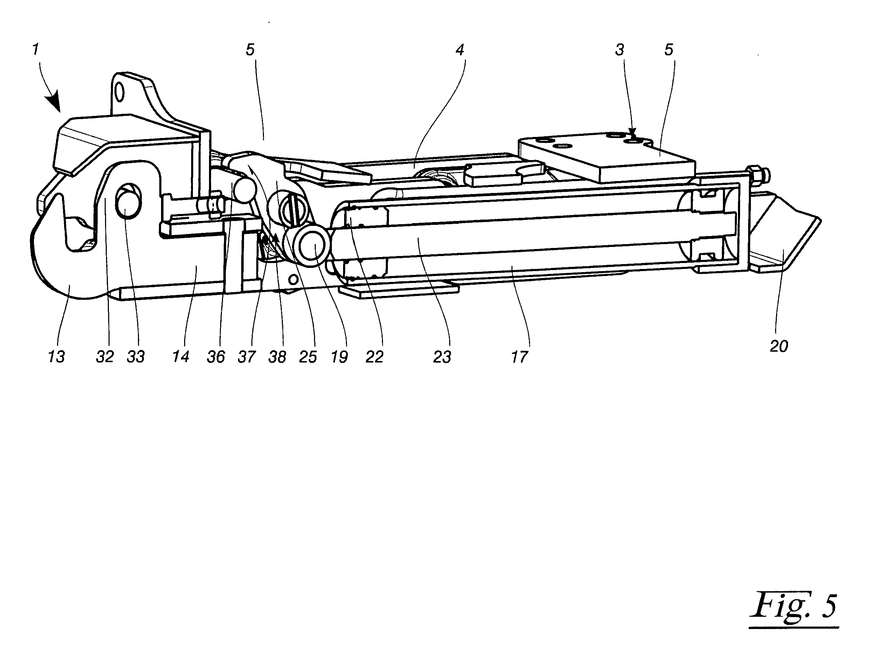

In der Auslöse-Lage des Kupplungsträgers 12 gemäß Figur 3 drückt eine Betätigungsnocke 35 des hinteren Lenkers 9 gegen die Sperrnocke 28. Beim weiteren Verstellen des Kupplungsträgers 12 wird die Sperrnocke 28 aus ihrer Sperrlage in eine in Figur 4 dargestellte Freigabelage verschwenkt. Damit sind die Hebel 25 frei verschwenkbar und werden durch die Wirkung des Hydraulikzylinders 17 entsprechend verstellt. In der Freigabestellung der Sperrnocke 28 gemäß Figur 4 übergreifen die Hebel 25 ein in Figur 5 dargestelltes Widerlager 36, welches im Rahmen 3 fahrzeugfest gehalten ist. Die Hebel 25 sind zu diesem Zweck mit einem hakenförmigen Endbereich 37 ausgestattet, so dass der Kupplungsträger 12 durch das Zusammenwirken der Hebel 25 mit dem Widerlager 36 angehoben wird.

Der Hebel 25 wirkt dabei für den Hydraulikzylinder 17 als Getriebe 38. Dieses Getriebe 38 hat die Aufgabe, das Anheben des Kupplungsträgers 12 im letzten Stück der Bahn 16 im Bereich der in Figur 5 dargestellten Kuppelstellung zu bewirken. Da in dieser Stellung der Hydraulikzylinder 17 fast genau senkrecht zur Bahn 16 steht, könnte der Hydraulikzylinder 17 diese Verstellbewegung ohne das Getriebe 38 nicht bewirken.

**Bezugszeichenliste**

| | | | |
|---|---|---|---|
| 1 | Kupplungsvorrichtung | 31 | Gegenlager |
| | | 32 | Flansch |
| 3 | Rahmen | 33 | Öffnung |
| 4 | seitliche Wange | 34 | Arretiervorrichtung |
| 5 | Querversteifung | 35 | Betätigungsnocke |
| 7 | Lager | 36 | Widerlager |
| 8 | vorderer Lenker | 37 | Endbereich |
| 9 | hinterer Lenker | 38 | Getriebe |
| 10 | freies Ende des Lenkers | | |
| 11 | Schwenklager | | |
| 12 | Kupplungsträger | | |
| 13 | Kupplung | | |
| 14 | Schaft | | |
| 15 | Verstellrichtung | | |
| 16 | Bahn | | |
| 17 | Hydraulikzylinder | | |
| 18 | hinterer Endbereich des Kupplungsträgers | | |
| 19, 20 | Schwenklager | | |
| 21 | Schwenkachse | | |
| 22 | Kolben | | |
| 23 | Kolbenstange | | |
| 24 | Lagerauge | | |
| 25 | Hebel | | |
| 26 | Achse | | |
| 27 | nierenförmige Öffnung | | |
| 28 | Sperrnocke | | |
| 29 | Schwenkachse | | |
| 30 | Feder | | |

## Patentansprüche

1. Kupplungsvorrichtung für ein Kraftfahrzeug (2), insbesondere für einen Ackerschlepper, wobei die Kupplungsvorrichtung (1) mindestens einen vorderen (8) und mindestens einen hinteren Lenker (9) aufweist, deren freie Enden (10) mit einem eine Kupplung (13) haltenden Kupplungsträger (12) gelenkig verbunden sind, wobei der mindestens eine hintere Lenker (9) zwischen der Kupplung (13) und dem mindestens einen vorderen Lenker (8) am Kupplungsträger (12) angelenkt ist, und zur Verstellung des Kupplungsträgers (12) mindestens ein Hydraulikzylinder (17) vorgesehen ist, der mit dem Kupplungsträger (12) in Wirkverbindung steht, wobei der mindestens eine Hydraulikzylinder (17) endseitig mit einer fahrzeugfesten Schwenkachse (21) angelenkt ist, welche vor dem mindestens einen vorderen Lenker (8) vorgesehen ist, wobei der mindestens eine Hydraulikzylinder (17) den Kupplungsträger (12) über mindestens ein Getriebe (38) erfasst, welches mit mindestens einem fahrzeugfesten Widerlager (36) in Kraft übertragender Wirkverbindung steht, das mindestens eine Getriebe (38) mindestens einen am Kupplungsträger (12) angelenkten Hebel (25) aufweist, der mit dem mindestens einen Widerlager (36) in Wirkverbindung steht, der mindestens eine Hebel (25) mit mindestens einer Sperrnocke (28) in Wirkverbindung steht, **dadurch gekennzeichnet, dass** die mindestens eine Sperrnocke (28) den mindestens einen Hebel (25) im Schwenkbereich nahe der abgesenkten Stellung des Kupplungsträgers (12) sperrt und nahe seiner angehobenen Endstellung frei gibt.

2. Kupplungsvorrichtung für ein Kraftfahrzeug (2), insbesondere für einen Ackerschlepper, wobei die Kupplungsvorrichtung (1) mindestens einen vorderen (8) und mindestens einen hinteren Lenker (9) aufweist, deren freie Enden (10) mit einem eine Kupplung (13) haltenden Kupplungsträger (12) gelenkig verbunden sind, wobei der mindestens eine hintere Lenker (9) zwischen der Kupplung (13) und dem mindestens einen vorderen Lenker (8) am Kupplungsträger (12) angelenkt ist, und zur Verstellung des Kupplungsträgers (12) mindestens ein Hydraulikzylinder (17) vorgesehen ist, der mit dem Kupplungsträger (12) in Wirkverbindung steht, wobei der mindestens eine Hydraulikzylinder (17) endseitig mit einer fahrzeugfesten Schwenkachse (21) angelenkt ist, welche vor dem mindestens einen vorderen Lenker (8) vorgesehen ist, wobei der mindestens eine Hydraulikzylinder (17) den Kupplungsträger (12) über mindestens ein Getriebe (38) erfasst, welches mit mindestens einem fahrzeugfesten Widerlager (36) in Kraft übertragender Wirkverbindung steht, das mindestens eine Getriebe (38) mindestens einen am Kupplungsträger (12) angelenkten Hebel (25) aufweist, der mit dem mindestens einen Widerlager (36) in Wirkverbindung steht, **dadurch gekennzeichnet, dass** der mindestens eine Hebel (25) mit mindestens einer Betätigungsnocke (35) in Wirkverbindung steht, welche am mindestens einen hinteren Lenker (9) und/oder Fahrzeug fest vorgesehen ist.

3. Kupplungsvorrichtung nach Anspruch 1 oder 2, **dadurch gekennzeichnet, dass** die mindestens eine Sperrnocke (28) federnd in eine den mindestens einen Hebel (25) sperrende Stellung vorgespannt ist.

## Claims

1. Coupling device for a motor vehicle (2), in particular for a tractor, wherein the coupling device (1) has at least one front link (8) and at least one rear link (9), the free ends (10) of which links are coupled in an articulated manner to a coupling carrier (12) holding a coupling (13), wherein the at least one rear link (9) is articulated on the coupling carrier (12) between the coupling (13) and the at least one front link (8), and, in order to adjust the coupling carrier (12), at least one hydraulic cylinder (17) is provided which is operatively connected to the coupling carrier (12), wherein the at least one hydraulic cylinder (17) is articulated on the end side with a vehicle-mounted pivot axis (21) which is provided in front of the at least one front link (8), wherein the at least one hydraulic cylinder (17) takes hold of the coupling carrier (12) via at least one gearing (38) which is operatively connected in a force-transmitting manner to at least one vehicle-mounted abutment (36), the at least one gearing (38) has at least one lever (25) which is articulated on the coupling carrier (12) and is operatively connected to the at least one abutment (36), the at least one lever (25) is operatively connected to at least one blocking cam (28), **characterized in that** the at least one blocking cam (28) blocks the at least one lever (25) in the pivoting range in the vicinity of the lowered position of the coupling carrier (12) and releases same in the vicinity of its raised end position.

2. Coupling device for a motor vehicle (2), in particular for a tractor, wherein the coupling device (1) has at least one front link (8) and at least one rear link (9), the free ends (10) of which links are coupled in an articulated manner to a coupling carrier (12) holding a coupling (13), wherein the at least one rear link (9) is articulated on the coupling carrier (12) between the coupling (13) and the at least one front link (8), and, in order to adjust the coupling carrier (12), at least one hydraulic cylinder (17) is provided which is operatively connected to the coupling carrier (12), wherein the at least one hydraulic cylinder (17) is articulated on the end side with a vehicle-mounted pivot axis (21) which is provided in front of the at least one front link (8), wherein the at least one hydraulic cylinder (17) takes hold of the coupling carrier (12) via at least one gearing (38) which is operatively connected in a force-transmitting manner to at least one vehicle-mounted abutment (36), the at least one gearing (38) has at least one lever (25) which is articulated on the coupling carrier (12) and is operatively connected to the at least one abutment (36), **characterized in that** the ate least one lever (25) is operatively connected to at least one actuating cam (35) which is fixedly provided on the at least one rear link (9) and/or vehicle.

3. Coupling device according to Claim 1 or 2, **characterized in that** the at least one blocking cam (28) is resiliently prestressed into a position blocking the at least one lever (25).

## Revendications

1. Dispositif d'embrayage pour un véhicule automobile (2), notamment pour un tracteur agricole, le dispositif d'embrayage (1) comportant au moins une bielle avant (8) et au moins une bielle arrière (9) dont les extrémités libres (10) sont reliées de façon articulée à un support d'embrayage (12) supportant un embrayage (13), l'au moins une bielle arrière (9) étant articulée au support d'embrayage (12) entre l'embrayage (13) et l'au moins une bielle avant (8) et au moins un vérin hydraulique (17) étant prévu pour déplacer le support d'embrayage (12), ledit vérin étant en liaison active avec le support d'embrayage (12), l'au moins un vérin hydraulique (17) étant articulé du côté d'extrémité à un axe de pivotement (21) fixe par rapport au véhicule prévu avant l'au moins une bielle avant (8), l'au moins un vérin hydraulique (17) saisissant le support d'embrayage (12) par l'intermédiaire d'au moins une transmission (38) en liaison active de transmission de force avec au moins un contre-palier de roulement (36) fixe par rapport au véhicule, l'au moins une transmission (38) comportant au moins un levier (25) articulé au support d'embrayage (12) en liaison active avec l'au moins un contre-palier de roulement (36), l'au moins un levier (25) étant en liaison active avec au moins une came de verrouillage (28), **caractérisé en ce que** l'au moins une came de verrouillage (28) verrouille l'au moins un levier (25) dans la zone de pivotement, à proximité de la position abaissée du support d'embrayage (12), et le libère à proximité de sa position d'extrémité soulevée.

2. Dispositif d'embrayage pour un véhicule automobile (2), notamment pour un tracteur agricole, le dispositif d'embrayage (1) comportant au moins une bielle avant (8) et au moins une bielle arrière (9) dont les extrémités libres (10) sont reliées de façon articulée à un support d'embrayage (12) supportant un embrayage (13), l'au moins une bielle arrière (9) étant articulée au support d'embrayage (12) entre l'embrayage (13) et l'au moins une bielle avant (8) et au moins un vérin hydraulique (17) étant prévu pour déplacer le support d'embrayage (12), ledit vérin étant en liaison active avec le support d'embrayage (12), l'au moins un vérin hydraulique (17) étant articulé du côté d'extrémité avec un axe de pivotement (21) fixe par rapport au véhicule prévu avant l'au moins une bielle avant (8), l'au moins un vérin hydraulique (17) saisissant le support d'embrayage (12) par l'intermédiaire d'au moins une transmission (38) en liaison active de transmission de force avec au moins un contre-palier de roulement (36) fixe par rapport au véhicule, l'au moins une transmission (38) comportant au moins un levier (25) articulé au support d'embrayage (12) en liaison active avec l'au moins un contre-palier de roulement (36), **caractérisé en ce que** l'au moins un levier (25) est en liaison active avec l'au moins une came d'actionnement (35) prévue fixement au niveau d'au moins une bielle arrière (9) et/ou du véhicule.

3. Dispositif d'embrayage selon la revendication 1 ou 2, **caractérisé en ce que** l'au moins une came de verrouillage (28) est précontrainte de façon élastique dans une position verrouillant l'au moins un levier (25).
